Europäisches Patentamt

**European Patent Office**

Office européen des brevets

(11) Veröffentlichungsnummer: **0 486 693 A1**

(12) **EUROPÄISCHE PATENTANMELDUNG**
veröffentlicht nach Art. 158 Abs. 3
EPÜ

(21) Anmeldenummer: **91907230.6**

(22) Anmeldetag: **25.09.90**

(86) Internationale Anmeldenummer:
**PCT/SU90/00225**

(87) Internationale Veröffentlichungsnummer:
**WO 91/14881 (03.10.91 91/23)**

(51) Int. Cl.⁵: **F16D 69/02**, B32B 5/16

(30) Priorität: **19.03.90 SU 4804539**

(43) Veröffentlichungstag der Anmeldung:
**27.05.92 Patentblatt 92/22**

(84) Benannte Vertragsstaaten:
**BE DE FR GB IT SE**

(71) Anmelder: **ZAPOROZHSKY AVTOMOBILNY ZAVOD 'KOMMUNAR' (PROIZVODSTVENNOE OBIEDINENIE 'AVTOZAZ')**
pr. Lenina 8
Zaporozhie, 330063(SU)
Anmelder: **INSTITUT PROBLEM PROCHNOSTI AKADEMII NAUK UKRAINSKOI SSR**
ul. Timiryazevskaya, 2
Kiev, 252014(SU)

(72) Erfinder: **MORGUN, Vladimir Vladimirovich**
ul. Paramonova, 4a-45
Zaporozhie, 330059(SU)

Erfinder: **LYASHENKO, Boris Artemovich**
ul. Kirova, 9-27
Kiev, 252021(SU)
Erfinder: **SVERGUNOV, Alexandr Grigorievich**
ul. Novgorodskaya, 5-19
Zaporozhie, 330076(SU)
Erfinder: **TSYGULEV, Oleg Vasilievich**
ul. Lunacharskogo, 1/2-83
Kiev, 252097(SU)
Erfinder: **RUTKOVSKY, Anatoly Vitalievich**
pr. Pobedy, 106/2-12
Kiev, 252115(SU)
Erfinder: **PAPASHEV, Oleg Khairullovich**
ul. Zadneprovskaya, 29-4
Zaporozhie, 330113(SU)

(74) Vertreter: **Patentanwälte Zellentin & Partner**
Zweibrückenstrasse 15
W-8000 München 2(DE)

(54) **REIBUNGSELEMENT FÜR REIBUNGSEINHEIT.**

(57) Die Erfindung bezieht sich auf Reibpaarungen von Maschinenelementen.

Das Reibelement einer Reibpaarung enthält eine Matrize (1), deren Reibfläche mit einem Überzug in Form einer Vielzahl von Teilchen (2) mit entwickelter Oberfläche aus einem verschleissfesten Werkstoff armiert ist.

Die Teilchen (2) sind im Körper der Matrize (1) derart befestigt, dass sie über ihre Oberfläche unter Bildung von Konturen (2') eines Mikroreliefs teilweise vorstehen und mindestens auf einer der konzentrischen Kreislinien liegen, deren Mittelpunkt mit dem Drehpunkt des Reibelementes übereinstimmt.

Die Konturen des Mikroreliefs sind von den Teilchen (2) in solcher Weise formiert, dass sie einen veränderlichen Flächeninhalt der Reibfläche ausbilden, der von der Zone der maximalen Spannungen im Reibelement zur Zone der minimalen Spannungen desselben, abnimmt.

Zwischen den Teilchen aus verschleissfestem Werkstoff sind Teilchen (3, 4) aus Korrosionsschutzwerkstoff und abrasivem Werkstoff verteilt.

Die Armierung geschieht nach einem beliebigen bekannten Verfahren, so beispielsweise durch Fun-

kendotierung bzw. Plasmaspritzen.

Die Erfindung kann beispielsweise für die Bremsscheibe oder Bremstrommel eines PKWs sowie für die Kupplungsscheibe angewendet werden.

FIG. 2

Die Erfindung bezieht sich auf Reïbpaarungen von Maschinenteilen, insbesondere auf das Reibelement einer Reibpaarung.

Stand der Technik

Bekanntlich erfahren die Reibelemente während des Betriebes alternierende mechanische und Temperaturspannungen, unter deren Einwirkung ihre Reibfläche in der Zone der erhöhten Beanspruchung intensiver zerstört wird.

Es ist unter anderem festgestellt worden, dass die Abnutzungsfläche von Bremsscheiben eine hyperbolische Form besitzt und bei Entfernung des Paarungsflächenpunktes von der Drehachse angesichts des abnehmenden Druckes Deformationen und Verschleiss zurückgehen.

Die Einlaufzeit der Paarungsflächen hängt vom Verhältnis der Scheibenhalbmesser (je breiter die Scheibe, um so langsamer ist das Einlaufen) sowie von den Werkstoffkennwerten ab. Für verschleissfestere Werkstoffe und Werkstoffe mit geringer Kontaktsteife findet die Umverteilung von Drücken langsamer statt, weshalb die wertvollen Eigenschaften vor neuen Werkstoffen in realen Paarungen nicht genutzt werden können und sogar imstande sind, negative Erscheinungen herbeizuführen, sofern keinerlei Massnahmen zur Verkürzung der Einlaufzeit getroffen werden.

In allen Fällen ist die erste Arbeitsperiode der Paarungen durch eine intensivere Umverteilung der Druckkurve gekennzeichnet.

Es ist ferner festgestellt worden, dass als massgebender Kennwert der Lebensdauer des Reibelementes die Temperatur auftritt.

Daher werden an die Reibelemente erhöhte Anforderungen hinsichtlich der Gewährleistung einer guten Wärmeableitung, der Verschleissfestigkeit, der Stabilität des Reibungsfaktors von zusammenwirkenden Paaren sowie der Konstruktionssteifigkeit und -masse und anderer Kennwerte gestellt.

Zur Realisierung dieser Anforderungen werden die Reibelemente, insbesondere die Bremsscheiben, aus einer Leichtmetallegierung hergestellt, die eine hohe Wärmeleitzahl besitzt, wobei die Reibfläche derselben mit einer verschleissfesten Schicht überzogen wird, die in der Matrizenleichtmetallegierung dispergiertes Siliziumkarbid enthält (EP, B, 0183036). In der erwähnten Bremsscheibe ist eine gute Wärmeableitung gewährleistet, wobei das geringe spezifische Gewicht der Leichtmetallegierung eine leichte Konstruktion des Reibelementes zu erzielen erlaubt.

Allerdings ist die geschlossene verschleissfeste Schicht mit gleichen physikalisch-mechanischen Kennwerten an der Reibfläche nicht imstande, einen entsprechenden Widerstand gegen die beim Betrieb wirkenden alternierenden thermomechanischen Spannungen zu gewährleisten. Daher nutzt sich die Reibfläche ungleichmässig ab, was sich im Endergebnis auf die Lebensdauer des Erzeugnisses nachteilig auswirkt.

Darüber hinaus gewährleistet diese Konstruktion keine optimale Tragfähigkeit der Reibfläche des Elementes und trägt nicht zur Senkung der Herstellungskosten desselben bei.

Bekannt sind ferner Einzelteile, die eine erhöhte Verschleissfestigkeit besitzen, welche durch die Armierung des wärmeleitenden Matrizenwerkstoffes mit einem Überzug in Form einer Vielzahl einzelner Teilchen mit entwickelter Oberfläche aus einem verschleissfesten Werkstoff sichergestellt wird, die im Matrizenkörper befestigt sind und über die Matrizenoberfläche unter Bildung eines regelmässigen Mikroreliefs teilweise vorragen (SU, A, Nr. 677549). Die aus den einzelnen Teilchen des Armierungsüberzuges zusammengesetzte Reibfläche besitzt eine optimale Tragfähigkeit, und das Einzelteil mit der erwähnten Oberfläche ist wegen eines geringen Verbrauches an verschleissfestem Werkstoff recht kostengünstig in der Herstellung.

Da aber die Teilchen in jeder der Flächeneinheiten der Berührungsfläche eine gleiche Dichte aufweisen sowie mit gleichen Abmessungen bei ein und derselben Werkstoffzusammensetzung hergestellt sind, wirken auf die Reibfläche des Elementes alternierende Spannungsfelder ein, so dass diese ihnen keinen äquivalenten Widerstand entgegensetzen kann. Dadurch unterliegt die Oberfläche des Einzelteils einem ungleichmässigen Verschleiss, was die Funktionsfähigkeit desselben erheblich reduziert.

Offenbarung der Erfindung

Der Erfindung liegt die Aufgabe zugrunde, ein solches Reibelement für eine Reibpaarung zu schaffen, dessen Konstruktion einen gegenüber den beim Betrieb wirkenden Ausseneinwirkungen äquivalenten Widerstand gewährleistet.

Die gestellte Aufgabe wird dadurch gelöst, dass im Reibelement einer Reibpaarung, das eine Matrize enthält, deren Reibfläche einen armierenden Überzug in Form einer Vielzahl von Teilchen mit entwickelter Oberfläche aus einem verschleissfesten Werkstoff besitzt, die im Matrizenkörper befestigt sind und über deren Oberfläche unter Bildung eines regelmässigen Mikroreliefs teilweise vorstehen, erfindungsgemäss das regelmässige Mikrorelief von Konturen verschiedener geometrischer Form gebildet ist, wobei der Flächeninhalt der von den Teilchen gebildeten Reibfläche von der Zone der maximalen Spannungen im Reibelement zur Zone der minimalen Spannungen desselben abnimmt.

Der Vorteil der erfindungsgemässen Konstruktion besteht darin, dass sie einen gleichmässigen Verschleiss der Reibfläche gewährleistet. Dies wird durch eine Änderung des Flächeninhaltes der aus den Teilchen entstandenen Reibfläche erzielt, die durch Änderung der Anordnungsdichte der Teilchen in der Matrize und/oder der Abmessungen derselben herbeigeführt wird.

Überdies verhindert die ungleichmässige Überzugsdichte die Entstehung einer Resonanzwelle angesichts des veränderlichen Bremsmomentes bei minimaler Massenunwucht des Reibelementes infolge der geringen Masse der genannten Teilchen.

Gemäss einer der Ausführungsformen der Erfindung befinden sich die Teilchen praktisch mindestens auf einer der konzentrischen Kreislinien, deren Mittelpunkt mit dem Drehpunkt des Reibelementes übereinstimmt.

In sehr zweckmässiger Weise kann die Konstruktion des Reibelementes derart sein, dass dessen Überzug in der Zone der maximalen Matrizenspannungen aus einem verschleissfesteren Werkstoff als in der Zone der minimalen Spannungen ausgeführt ist.

Diese Ausführung verbilligt die Herstellungskosten des Reibelementes dank der Einsparung des teuren verschleissfesten Werkstoffes.

In zweckmässiger Weise wird die Matrize mindestens aus zwei Werkstoffen hergestellt, wobei in der Zone der maximalen Spannungen höhere physikalisch-mechanische Kennwerte als in der Zone der minimalen Spannungen vorgesehen sind, was die Lebensdauer des Elementes verlängert.

In einer der Ausführungsformen der Erfindung sind die Teilchen mindestens in einer der Konturen zu einer Vielzahl von praktisch geschlossenen Konturen gruppiert. Diese Konstruktionsvariante trägt zu einer erheblichen Verlängerung der Betriebsdauer des Reibelementes bei.

Zweckmässigerweise wird ferner die Matrize des Reibelementes mit Teilchen aus einem Korrosionsschutzwerkstoff armiert, die zwischen den Teilchen aus verschleissfestem Werkstoff angeordnet sind.

Dadurch, dass am Reibelement ein galvanisch weniger widerstandsfähiger Werkstoff als der Matrizenwerkstoff vorhanden ist, wird der protektierende Erzeugnisschutz verbessert.

Zweckmässigerweise wird ferner die Matrize des Reibelementes mit Teilchen aus eins abrasiven Werkstoff armiert, die zwischen den Teilchen aus verschleissfestem Werkstoff und Korrosionsschutzwerkstoff angeordnet sind.

Die Teilchen aus abrasivem Werkstoff sind zur Aufrechterhaltung einer entsprechenden Rauhigkeit der mit der Oberfläche des erfindungsgemässen Reibelementes kontaktierenden Oberfläche bestimmt,weil ein bestimmter Grad der Oberflächenrauhigkeit den Betrag des übertragenen Drehmomentes erhöht und den Reibungsfaktor stabilisiert.

In sehr zweckmässiger Weise wird jedes aus abrasivem Werkstoff bestehende Teilchen aus nicht weniger als zwei Werkstoffen gefertigt, wodurch Verbundwerkstoffteilchen entstehen, die zur Erhöhung der Verschleissfestigkeit der Berührungsfläche am effektivsten beitragen.

Am zweckmässigsten ist, dass jedes Teilchen aus verschleissfestem Werkstoff im zur Reibfläche der Matrize des Reibelementes parallelen Querschnitt eine ellipsenähnliche Form aufweist. Der Vorteil dieser empfohlenen Teilchenform besteht darin, dass sie zur Reduzierung von Berührungsspannungen, von Schubspannungen, die in einer gewissen kritischen Tiefe unter der Reibfläche entstehen, sowie des Betrags dieser kritischen Tiefe selber beiträgt, welche von der Berührungsflächenform abhängig ist.

In der vorzugsweisen Ausführungsform der Erfindung sind die aus verschleissfestem Werkstoff bestehenden Teilchen in der Zone der maximalen mechanischen Spannungen und der minimalen Temperaturspannungen mit der grösseren Ellipsenachse in der Richtung orientiert, die mit der Richtung der relativen Verschiebung dieses Elementes praktisch übereinstimmt, während sie in der Zone der maximalen Temperaturspannungen und minimalen mechanischen Spannungen mit der genannten Achse praktisch quer zu dieser Richtung orientiert sind.

Eine derartige Anordnung der Teilchen aus verschleissfestem Werkstoff trägt zur Reduzierung der Berührungsspannungen in der Zone der maximalen mechanischen Spannungen bei und ermöglicht es, dynamische Kennwerte der Oberfläche zu beeinflussen.

In zweckmässiger Weise ist ferner in einem Teilchen aus verschleissfestem Werkstoff die kleinere Achse von 0,001 bis 3,0 mm lang, während die grössere Achse nicht mehr als zwei kleinere Achsen beträgt, wobei die maximale Teilchenabmessung in der Normalen mindestens der kleineren Ellipsenachse gleich ist.

Diese Abmessungen der Teilchen aus verschleissfestem Werkstoff gewährleisten die Erzeugung einer Reibfläche, die einen gegenüber den äusseren Belastungen proportionalen Widerstand leisten kann, was die Lebensdauer des Reibelementes verlängert.

Ihrerseits sind die Teilchen aus Korrosionsschutzwerkstoff und verschleissfestem Werkstoff im zur Reibfläche parallelen Querschnitt in Form eines Kreises mit Abmessungen von 0,001 bis 0,15 mm ausgeführt, während ihre Abmessungen in der Normalen zur Reibfläche von 0,001 bis 0,375 mm betragen.

Die Abmessungen der Teilchen aus Korrosionsschutzwerkstoff und abrasivem Werkstoff sind durch die Verhältnisse der Erzielung einer Gleichgewichtsrauhigkeit an der Reibfläche bedingt. Dabei wird dank bei den Teilchen vorhandenen Unterschieden in Ausführungsform, Grösse, Werkstoffzusammensetzung die Entstehung einer Resonanzwelle und eines mit derselben beim Bremsvorgang zusammenhängenden Quietschens verhindert.

In der vorzugsweisen Ausführungsform der Erfindung soll der im zur Reibfläche normalen Matrizenquerschnitt befindliche Teil eines Teilchens aus verschleissfestem Werkstoff nicht weniger als die halbe Höhe desselben betragen und hyperbolisch gestaltet sein.

Diese Form des Teilchens aus verschleissfestem Werkstoff besitzt eine optimale Oberfläche für die Wärmestreuung, was zur Wärmeableitung von der Reibfläche am besten beiträgt und in dieser Weise ihre Lebensdauer verlängert.

Am zweckmässigsten sind an einem Reibelement, das eine Bremsscheibe eines PKWs bzw. eine Kupplungsscheibe darstellt, die Teilchen aus verschleissfestem Werkstoff in Form von Windungen mit einer Steigung angeordnet, die in Richtung des grösser werdenden Halbmessers derselben zunimmt.

Eine solche Anordnung der Teilchen an der Reibfläche der Bremsscheibe trägt ausser den genannten Vorteilen auch zur Vermeidung von Vibrationen und Quietschen beim Bremsen bei.

In sehr zweckmässiger Weise sollen ferner die Teilchen aus abrasivem und verschleissfestem Werkstoff Konturen mit regelmässigem Mikrorelief in Form von Spiralen bilden, die eine entgegengesetzte Formierungsrichtung von Windungen bilden.

Diese Ausführung des Reibelementes trägt am besten zur Verlängerung des Lebensdauer des Erzeugnisses bei.

Bei einem Beibelement vom Typ einer Bremstrommel eines PKWs oder eines Lagergehäuses werden die Teilchen aus verschleissfestem Werkstoff am zweckmässigsten in Form von Windungen angeordnet, die eine Schraubenlinie darstellen.

Der Vorteil der erfindungsgemässen Konstruktion besteht darin, dass sie den besten Kontakt der zusammenwirkenden Reibflächen vermittels der vorstehenden Teilchen während des Betriebes gewährleistet, was sich auf die Lebensdauer des Erzeugnisses vorteilhaft auswirkt.

Beschreibung der Zeichnungen

Weitere Ziele und Vorteile der vorliegenden Erfindung sind aus der nachstehenden eingehenden Beschreibung der Ausführungsbeispiele derselben anhand von Zeichnungen erkennbar. Es zeigt:

Fig. 1 ein Fragment eines gemäss der Erfindung in Form einer Bremsscheibe ausgeführten Reibelementes im Schnitt;

Fig. 2 die Bremsscheibe in Planansicht;

Fig. 3 ein Teilchen aus verschleissfestem Material;

Fig. 4 ein Teilchen aus Verbundwerkstoff;

Fig. 5 ein Teilchen aus abrasivem Werkstoff;

Fig. 6 ein Teilchen aus Korrosionsschutzwerkstoff;

Fig. 7 ein Fragment des Reibelementes, dessen Matrize mehrteilig ausgeführt ist und die Teilchen aus nach ihren Eigenschaften verschiedenen Werkstoffen bestehen;

Fig. 8 die Druckkurve an der Reibfläche des Elementes;

Fig. 9 die Bremsscheibe mit Teilchen aus verschleissfestem Werkstoff, die eine verschiedene Orientierung besitzen, in der Planansicht;

Fig. 10 ein Fragment des Elementes mit einem Teilchen aus verschleissfestem Werkstoff;

Fig. 11 ein Teilchen aus verschleissfestem Werkstoff in Planansicht;

Fig. 12 die Bremsscheibe (eine konstruktive Ausführungsform);

Fig. 13 ein Fragment der Bremsscheibe;

Fig. 14 die Bremsscheibe (eine konstruktive Ausführungsform);

Fig. 15 die Bremsscheibe (eine konstruktive Ausführungsform).

Ausführungsform der Erfindung

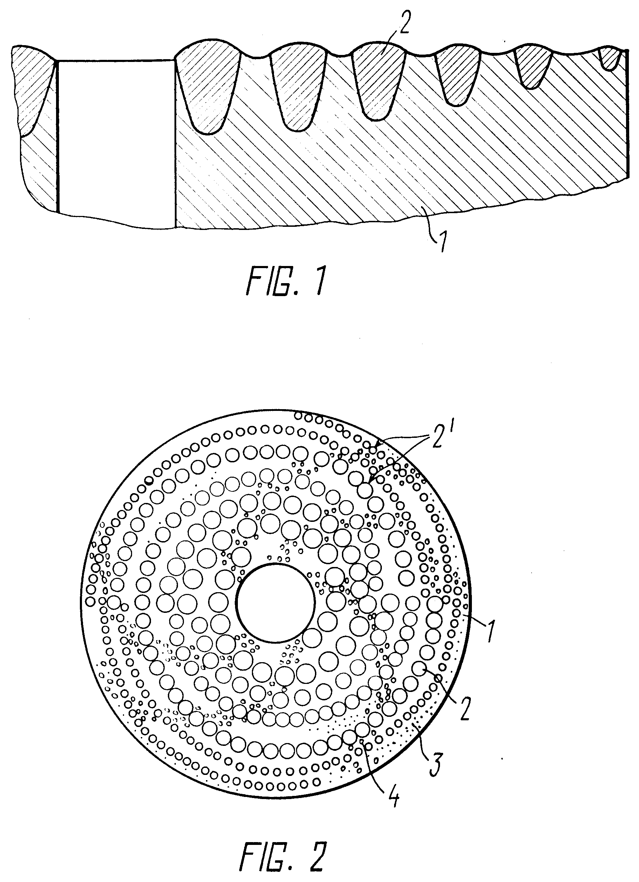

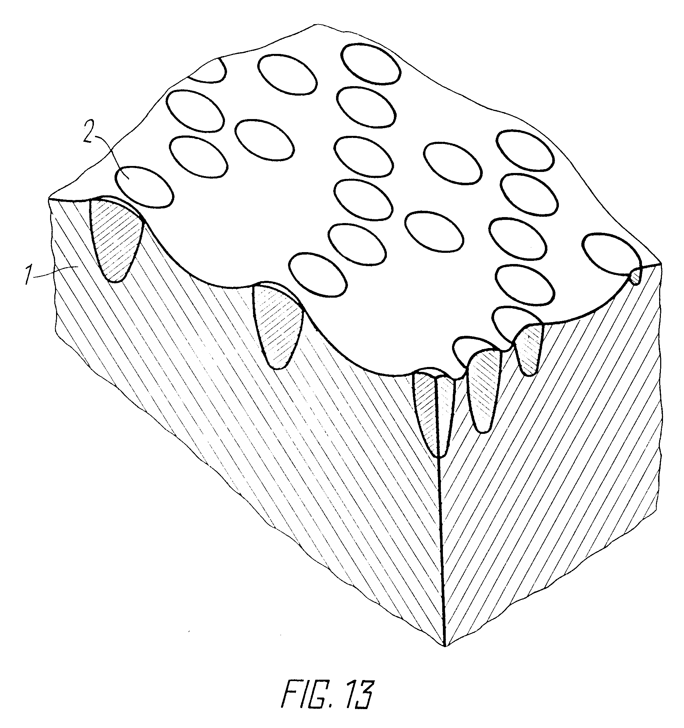

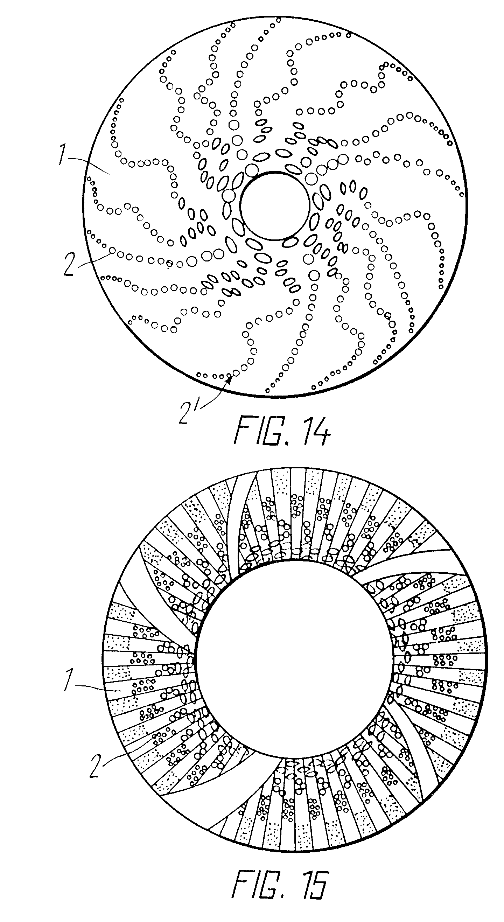

Das Reibelement einer Reibpaarung enthält eine Matrize 1, deren Oberfläche mit einem Überzug in Form einer Vielzahl von Teilchen 2 mit entwickelter Oberfläche armiert ist (Fig. 1, 2, 7, 9, 12-15). Die Teilchen 2 sind aus einem verschleissfesten Werkstoff, beispielsweise aus Stahl, gefertigt, der eine hohe Härte, Wärme- und Korrosionsbeständigkeit gegenüber dem Werkstoff der Matrize 1 besitzt, welcher eine geringere Härte und Dichte, eine höhere spezifische Wärmeleitfähigkeit und Elastizität aufweist und beispielsweise aus einer hitzefesten Aluminiumlegierung besteht.

Die Teilchen 2 (Fig. 1, 3, 7) sind in Körper der Matrize 1 befestigt und stehen über deren Oberfläche unter Bildung von ihrer geometrischen Form nach verschiedenen Konturen 2' eines regelmässigen Mikroreliefs (Fig. 2, 9, 12, 13, 14, 15) vor.

Die Konturen 2' sind von den Teilchen 2 mit einem nicht äquidistanten Abstand zwischen ihnen derart formiert, dass sie einen veränderlichen Flächeninhalt der Reibfläche ausbilden, der von der Zone der maximalen Beanspruchung des Reibelementes zur Zone der minimalen Beanspruchung desselben abnimmt.

Der veränderliche Flächeninhalt der Reibfläche der Teilchen 2 kann sowohl durch Ändern ihrer Anordnungsdichte (Fig. 2) als auch durch Ändern ihrer Abmessungen (Fig. 9) erzeugt werden. Die Teilchen 2 befinden sich praktisch auf einer der konzentrischen Kreislinien, deren Mittelpunkt mit dem Drehpunkt des Reibelementes übereinstimmt.

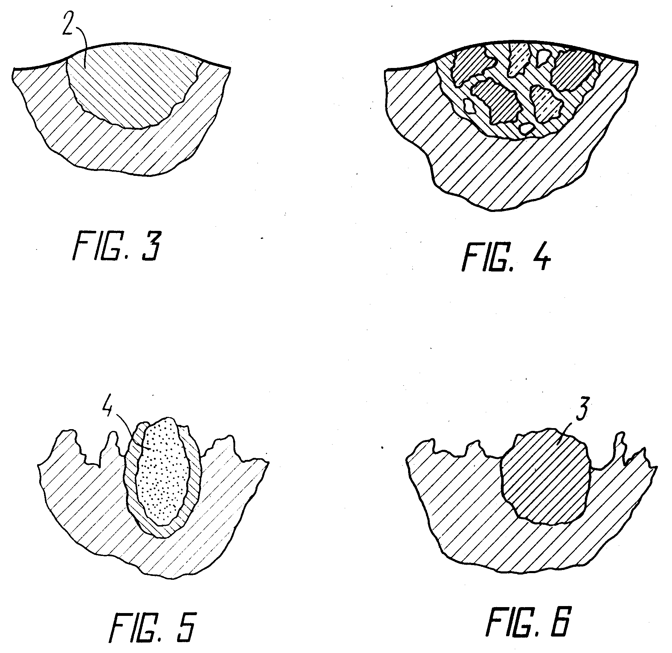

Das Teilchen 2 aus verschleissfestem Werkstoff kann aus mindestens zwei Werkstoffen gefertigt sein, die einen Verbundwerkstoff (Fig. 4) bilden.

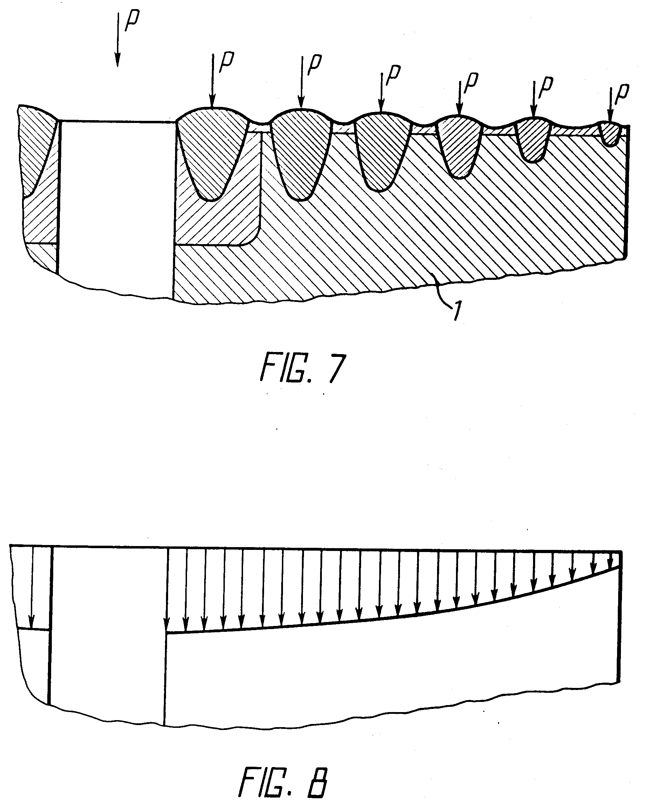

In sehr zweckmässiger Weise werden die in der Zone der maximalen Spannungen der Matrize 1 liegenden Teilchen aus einem verschleissfesteren Werkstoff als jene in der Zone der minimalen Spannungen, beispielsweise aus verschiedenen Stahlsorten, gefertigt. Die Matrize 1 ist aus einem Werkstoff mit höheren physikalisch-mechanischen Kennwerten in der Zone der maximalen Spannungen als in der Zone der minimalen Spannungen, beispielsweise jeweils aus einer Kupfer- und einer Aluminiumlegierung (Fig. 7), ausgeführt.

Bei einem Reibelement, das in Form einer zwei Reibflächen aufweisenden Bremsscheibe ausgeführt ist, kann der Werkstoff mit verschiedener Verschleissfestigkeit auf den entgegengesetzten Scheibenoberflächen angebracht sein.

Die Gesamtfläche der Teilchen 2 ist durch die Bedingungen der Gewährleistung eines nichtkontinuierlichen Überzugs vorgeschrieben und macht bis 80% vom Flächeninhalt der gesamten Reibfläche aus.

Zwischen den Teilchen 2 aus verschleissfestem Werkstoff befinden sich die Teilchen 3 aus Korrosionsschutzwerkstoff (Fig. 2, 6). Denkbar ist auch eine Konstruktionsvariante, bei der die korrosionsfeste Schicht auf der gesamten Oberfläche der Matrize 1 (Fig. 7) aufgetragen ist. Der zum protektierenden Schutz der Matrize 1 bestimmte Werkstoff muss aus einer Reihe von Elementen ausgewählt werden, die galvanisch weniger widerstandsfähig als der Werkstoff der Matrize 1 sind.

Möglich ist auch eine Konstruktion des Reibelementes, bei dem zwischen den Teilchen 2, 3 aus verschleissfestem Werkstoff und Korrosionsschutzwerkstoff sich Teilchen 4 aus einem abrasiven Werkstoff, beispielsweise $Al_2O_3$ (Fig. 2, 5), befinden, die zur Kompatibilität mit dem Werkstoff der Matrize 1 beispielsweise mit Kupfer metallisiert werden können.

Die Teilchen 3 liegen chaotisch in der Matrize 1, wohingegen die Teilchen 4 zweckmässigerweise entlang den Konturen 2' des vorhandenen Mikroreliefs (Fig. 2) angeordnet sind.

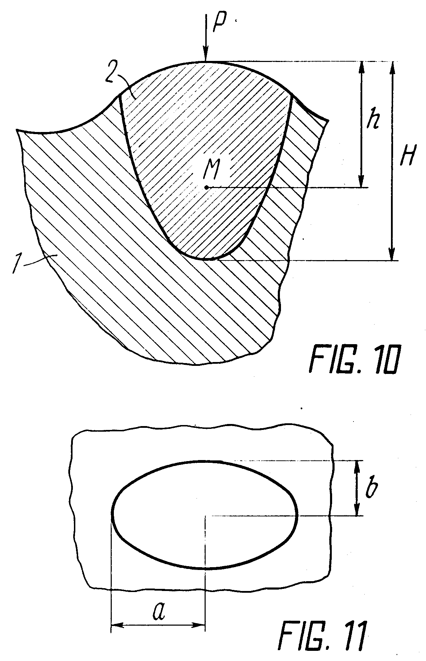

Die Teilchen 2 aus verschleissfestem Werkstoff besitzen im zur Reibfläche der Matrize 1 des Reibelementes parallelen Querschnitt eine ellipsenähnliche Form (Fig. 11).

Die ellipsenähnliche Form des armierenden Teilchens 2 trägt zur Reduzierung des Betrages von Berührungsspannungen, von in einer gewissen kritischen Tiefe im Punkt M (Fig. 10) entstehenden Schubspannungen bei runder Form des Teilchens ($\frac{b}{a}$ = 1), wobei "a" = "b" den Halbmesser dieses Teilchens bedeutet, (der Schnitt ist hier zur Reibfläche parallel), gilt: h = 0,47a; wenn "a" und "b" Ellipsenhalbachsen bedeuten, so gilt, bei $\frac{b}{a}$ = 0,34, h = 0,24a. Die kleinere Achse 2b der Ellipse (Fig. 11) eines Teilchens 2 beträgt von 0,001 bis 3,00 mm, die grössere 2a aber macht nicht mehr als zwei kleinere Achsen "2b" aus, wobei die maximale Abmessung eines Teilchens 2 in der Normalen zumindest der Länge der kleineren Achse 2b der Ellipse (Fig. 10) gleich sein muss, während der in der Matrize 1 liegende Teil des Teilchens 2 nicht weniger als die halbe Höhe H derselben betragen und eine hyperbolische Form besitzen muss. Die Abmessungen der Teilchen 2 sind praktisch ausgehend von der Bedingung gewählt, die Übereinstimmung mit dem Fleck der tatsächlichen Berührung zu gewährleisten. Die maximale Höhe H des verschleissfesten Teilchens 2 ist grösser als der Betrag h (Fig. 10), mit dem Ziel, dass der Punkt M (in dem die Schubspannungen ihren Maximalwert besitzen) im Werkstoff des armierenden Teilchens 2 liegt, so dass die maximalen Spannungen von den armierenden verschleissfesten Teilchen 2 aufgenommen werden.

In der Zone der maximalen mechanischen Spannungen sind die Teilchen 2 mit der grösseren Ellipsenachse 2a in der Richtung orientiert, die praktisch mit der Richtung der relativen Verschiebung des Reibelementes übereinstimmt, während sie in der Zone der maximalen Temperaturspannungen praktisch quer zu dieser Richtung (Fig. 9, 12, 14, 15) liegen.

Die Teilchen 3, 4 sind im zur Reibfläche parallelen Querschnitt in Form eines Kreises mit Abmessungen von 0,001 bis 0,15 mm ausgeführt, während deren Abmessungen in der Normalen zur Reibfläche von 0,001 mm bis 0,375 mm betragen.

Die Teilchen 2, 3, 4 bilden auf der Reibfläche ein welliges Profil ungleichmässiger Dicke.

Zur Verkürzung der Einlaufdauer der Reibfläche und Erzielung einer Gleichgewichtsrauhigkeit werden die Kuppen der Teilchen 2 einer zusätzlichen Bearbeitung unterzogen.

Die Teilchen 3, 4 müssen einen vorstehenden Teil aufweisen, der grössenmässig kleiner als die Gleichgewichtsrauhigkeit ist.

Die Armierung der Matrize 1 geschieht nach einem beliebigen bekannten Verfahren, beispielsweise durch Funkendotierung oder Plasmaspritzen.

Im Falle der Verwendung des Reibelementes als Reibpaarung für eine PKW-Bremsscheibe bzw. eine Kupplungsscheibe werden die Teilchen 2 aus verschleissfestem Werkstoff und die Teilchen 4 aus abrasivem Werkstoff zweckmässigerweise auf die Matrize 1 in Form von Windungen einer Spirale aufgetragen, deren Steigung in der Richtung des grösser werdenden Halbmessers derselben bei entgegengesetzter Formierungsrichtung zunimmt. Die Spirale kann sowohl ununterbrochen wie auch unterbrochen (Fig. 2, 9, 12, 15) formiert sein.

Bei Verwendung des Reibelementes als Reibpaarung für eine Bremstrommel müssen die Teilchen 2, 4 auf der Matrize 1 in Form von entlang einer Schraubenlinie liegenden Windungen befestigt werden.

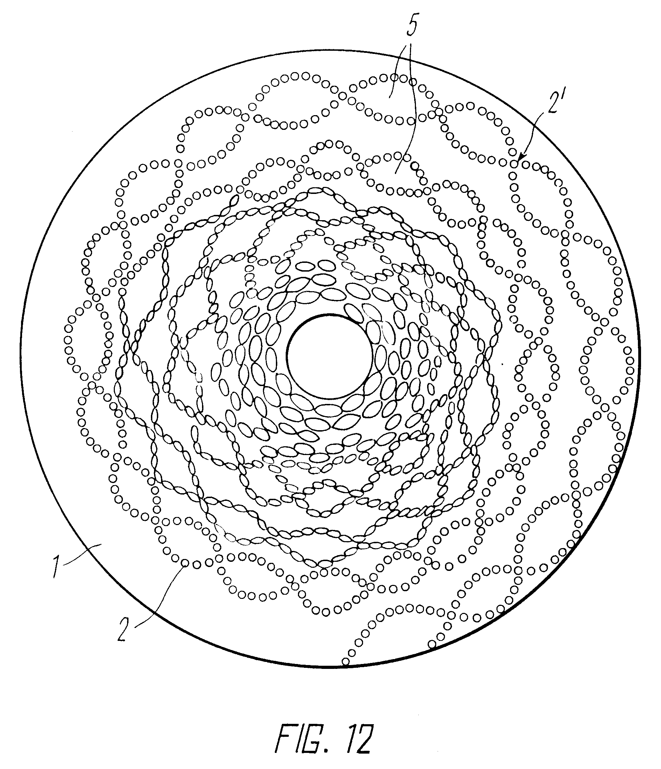

Die Konturen 2 des gebildeten Mikroreliefs können solcherweise formiert sein, dass mindestens in einer von ihnen zum Festhalten der Verschleissprodukte die Teilchen 2, 4 zu einer Menge von so gut wie geschlossenen Konturen 5 (Fig. 12) gruppiert sind.

Nachstehend soll die Funktion des Reibelementes bei dessen Einsatz als Bremsscheibe eines PKWs behandelt werden. An seiner Reibfläche wirken dabei die dem Anpressdruck der Bremsbacken entsprechenden Kräfte P (in Fig. nicht dargestellt). Die Berührung zweier Oberflächen erfolgt über die am höchsten vorstehenden Teilchen, d.h. die Teilchen 2, 3, 4.

Die mit den Teilchen 2, 3, 4 zusammenwirkende Berührungsfläche des zweiten Elementes hat dabei die Möglichkeit, durch die letzteren aufgrund der nichtäquidistanten Lage derselben entlang den Mikroreliefkonturen vollständig überdeckt zu werden.

Beim Bremsen wird Wärme erzeugt, die im wärmeableitenden Matrizenwerkstoff effektiv verteilt wird. Die Wärmeableitung wird auch durch die hyperbolische Form des in der Matrize 1 (Fig. 1, 7, 10, 13) befindlichen Teilchens 2 gefördert.

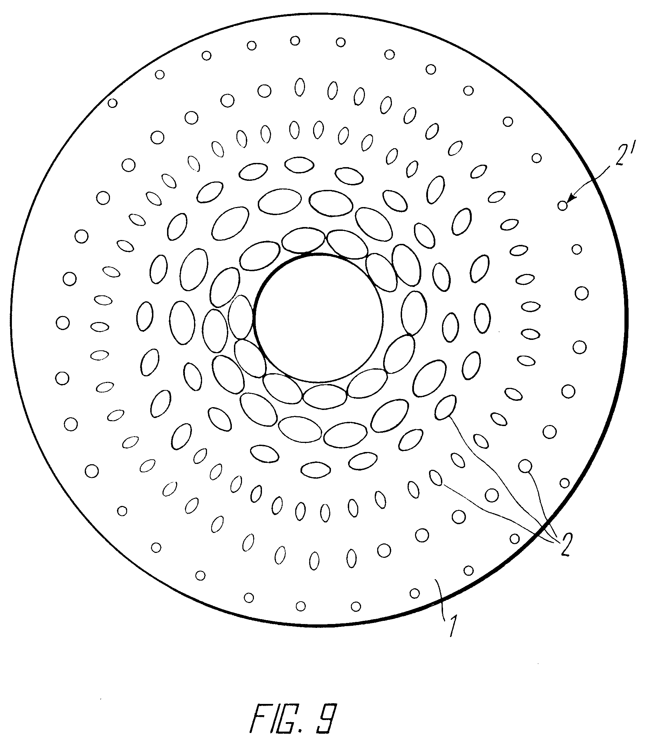

Dadurch, dass die Teilchen 2 aus verschleissfestem Werkstoff auf der Oberfläche der Matrize 1 mit verschiedener Dichte verteilt und/oder mit verschiedenen Abmessungen gemäss den wirkenden Belastungen (Fig. 7, 8) ausgeführt sind, ergibt sich für die Berührungsfläche eine Möglichkeit, den erwähnten Belastungen einen differenzierten Widerstand entgegenzusetzen und somit einen gleichmässigen Verschleiss des Reibelementes zu gewährleisten.

Zum gleichmässigen Verschleiss des Reibelementes wird ferner durch die Ausführung des Teilchen 2 aus einem verschleissfesteren Werkstoff in der Zone der maximalen mechanischen Spannungen als in der Zone der maximalen Temperaturspannungen sowie durch die Anordnung derselben mit der grösseren Ellipsenachse 2a in der Richtung beigetragen, die praktisch mit der Richtung der relativen Verschiebung des Reibelementes in der Zone der maximalen mechanischen Spannungen übereinstimmt und quer zu dieser Richtung in der Zone der minimalen Spannungen verläuft.

Die Teilchen 3 tragen zum protektierenden Schutz des Erzeugnisses bei, wohingegen die Teilchen 4 die mit der Oberfläche des erfindungsgemässen Reibelementes kontaktierende Oberfläche abrichten.

Dank der Ausführung der Teilchen 2, 3, 4 aus verschiedenen Werkstoffen mit unterschiedlichen Formen und Abmessungen wird die Entstehung einer Resonanzwelle, das Aufkommen von Klirren und Quietschen des Reibelementes beim Betrieb verhindert.

Somit gewährleistet die erfindungsgemässe konstruktive Ausführung des Reibelementes eine Steuermöglichkeit für dessen Betriebsdaten, was die Lebensdauer des Erzeugnisses verlängert.

Die Erfindung ist auf das angeführte Ausführungsbeispiel nicht beschränkt, es sind auch andere Ausführungsformen im Rahmen der Erfindungsschrift möglich.

Die Erfindung kann in Reibelementen, deren Oberfläche eine erhöhte Verschleissfestigkeit besitzen soll, insbesondere in Bremsvorrichtungen von Personenkraftwagen, in Bremsscheiben und -trommeln, Kupplungsscheiben, Stützkonstruktionen, beispielsweise in Spurlagern, Lagerhülsen u.a.m. sowie in Gesenkausrüstungen und Schneidwerkzeugen angewendet werden.

**Patentansprüche**

1. Reibelement einer Reibpaarung, das eine Matrize (1) enthält, deren Reibfläche einen armierenden Überzug in Form einer Vielzahl von Teilchen (2) mit entwickelter Oberfläche aus einem verschleissfesten Werkstoff besitzt, die im Körper der Matrize (1) befestigt sind und über deren Oberfläche unter Bildung eines regelmässigen Mikroreliefs teilweise vorstehen, dadurch **gekennzeichnet**, dass das gleichmässige Mikrorelief von nach ihrer geometrischen Form verschiedenen Konturen (2') gebildet ist, wobei der Flächeninhalt der von den Teilchen (2) gebildeten Reibfläche von der Zone der maximalen Spannungen im Reibelement zur Zone der minimalen Spannungen desselben abnimmt.

2. Reibelement einer Reibpaarung nach Anspruch 1, dadurch **gekennzeichnet**, dass die Teilchen (2) praktisch mindestens auf einer der konzentrischen Kreislinien liegen, deren Mittelpunkt mit dem Drehpunkt des Reibelementes übereinstimmt.

3. Reibelement einer Reibpaarung nach Anspruch 1 oder 2, dadurch **gekennzeichnet**, dass in der Zone der maximalen Spannungen der Reibfläche der Matrize (1) die Teilchen (2) mit grösseren Abmessungen ausgeführt und/oder mit einer höheren Dichte als in der Zone der minimalen Spannungen derselben angeordnet sind.

4. Reibelement einer Reibpaarung nach einem der Ansprüche 1, 2 oder 3, dadurch **gekennzeichnet**, dass der armierende Überzug in der Zone der maximalen Spannungen aus einem Werkstoff mit höheren physikalisch-mechanischen Kennwerten als in der Zone der minimalen Spannungen ausgeführt ist.

5. Reibelement einer Reibpaarung nach einem der Ansprüche 1 bis 4, dadurch **gekennzeichnet**, dass in mindestens einer der Konturen (2') die Teilchen (2) zu einer Vielzahl von praktisch geschlossenen Konturen (5) gruppiert sind.

6. Reibelement einer Reibpaarung nach einem der Ansprüche 1 bis 5, dadurch **gekennzeichnet**, das die Matrize (1) mindestens aus zwei Werkstoffen ausgeführt ist, nämlich in der Zone der maximalen Spannungen aus einem Werkstoff mit höheren physikalisch-mechanischen Kennwerten als in der Zone der minimalen Spannungen.

7. Reibelement einer Reibpaarung nach einem der Ansprüche 1 bis 6, dadurch **gekennzeichnet**, dass es mit Teilchen (3) aus einem Korrosionsschutzwerkstoff armiert ist, die zwischen den Teilchen (2) aus verschleissfestem Werkstoff angeordnet sind.

8. Reibelement einer Reibpaarung nach einem der Ansprüch 1 bis 7, dadurch **gekennzeichnet**, dass es mit Teilchen (4) aus einem abrasiven Werkstoff armiert ist, die zwischen den Teilchen (2, 3) aus verschleissfestem Werkstoff und Korrosionsschutzwerkstoff angeordnet sind.

9. Reibelement einer Reibpaarung nach einem der Ansprüche 1 bis 5, dadurch **gekennzeichnet**, dass jedes Teilchen (2) aus verschleissfestem Werkstoff im zur Reibfläche der Matrize (1) parallelen Querschnitt eine ellipsenähnliche Form aufweist.

10. Reibelement einer Reibpaarung nach Anspruch 9, dadurch **gekennzeichnet**, dass die Teilchen (2) aus verschleissfestem Werkstoff in der Zone der maximalen mechanischen Spannungen und der minimalen Temperaturspannungen mit der grösseren Ellipsenachse (2a) in der Richtung orientiert sind, die praktisch mit der Richtung der relativen Verschiebung des Reibelementes übereinstimmt, während sie in der Zone der maximalen Temperaturspannungen und minimalen mechanischen Spannungen praktisch quer zu dieser Richtung orientiert sind.

11. Reibelement einer Reibpaarung nach einem der Ansprüche 1-5, 9 oder 10, dadurch **gekennzeichnet**, dass im Teilchen (2) aus verschleissfestem Werkstoff die kleinere Ellipsenachse (2b) von 0,001 bis 3,0 mm, die grössere Achse (2a) aber nicht mehr als zwei kleinere Achsen (2b) beträgt, wobei die maximale Abmessung eines Teilchens (2) in der Normalen der Grösse der kleineren Ellipsenachse (2b) mindestens gleich ist.

12. Reibelement einer Reibpaarung nach Anspruch 11, dadurch **gekennzeichnet**, dass ein Teil des Teilchens (2) aus verschleissfestem Werkstoff, und zwar der in der Matrize (1) befindliche Teil, im zur Reibfläche normalen Querschnitt eine hyperbolische Form besitzt.

13. Reibelement einer Reibpaarung nach Anspruch 7 oder 8, dadurch **gekennzeichnet**, dass die Teilchen (3, 4) aus Korrosionsschutzwerkstoff und abrasivem Werkstoff im zur Reibfläche parallelen Querschnitt in Form eines Kreises mit den Grössen von 0,001 bis 0,15 mm ausgeführt sind, während ihre Abmessungen in der Normalen zur Reibfläche von 0,001 bis 0,37 mm betragen.

14. Reibelement einer Reibpaarung nach Anspruch 1 oder 7, dadurch **gekennzeichnet**, dass die Teilchen (2, 4) aus verschleissfestem und abrasivem Werkstoff Konturen (2') eines regelmässigen Mikroreliefs in Form von Spiralen bilden, die eine entgegengesetzte Formierungsrichtung ihrer Windungen besitzen.

15. Bremsscheibe eines PKWs, die ein nach einem beliebigen der Ansprüche 1 bis 14 ausgeführtes Reibelement darstellt.

16. Kupplungsscheibe, in der die Scheibe ein Reibelement darstellt, das nach einem beliebigen der Patentansprüche 1 bis 14 ausgeführt ist.

17. Bremstrommel eines PKWs, das ein nach einem beliebigen der Ansprüche 1 bis 14 ausgeführtes Reibelement darstellt.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

EP 0 486 693 A1

FIG. 14

FIG. 15

# INTERNATIONAL SEARCH REPORT

International Application No PCT/SU 90/00225

| I. CLASSIFICATION OF SUBJECT MATTER (if several classification symbols apply, indicate all) |
|---|

According to International Patent Classification (IPC) or to both National Classification and IPC

IPC⁵     F16D 69/102; B32B 5/16

## II. FIELDS SEARCHED

Minimum Documentation Searched ⁷

| Classification System | Classification Symbols |
|---|---|
| IPC⁵ | F16D 69/100, 69/02; B32B 5/16 |

Documentation Searched other than Minimum Documentation
to the Extent that such Documents are Included in the Fields Searched ⁸

## III. DOCUMENTS CONSIDERED TO BE RELEVANT⁹

| Category* | Citation of Document, ¹¹ with indication, where appropriate, of the relevant passages ¹² | Relevant to Claim No. ¹³ |
|---|---|---|
| A | EP, A2, (GENERAL MOTORS CORPORATION), 06 May 1987 (06.05.87), fig. 1, the abstract | 1,9 |
| A | FR,A1, (TOKICO LTD.), 22 February 1985 (22.02.85), fig. 3, page 3, lines 2,3,4,5 | 1,2,5 |
| A | SU,A1, 626282 (Spetsialuoe konstruktorskoe bjzo po spetsialnym gusenichnym traktoram klassa 2T tyagi), 14 August 1978 (14.08.78), column 1, lines 13-28 | 1-4 |
| A | US, A, 3899050 (TEXTAR GMBH), 12 August 1975 (12.08.75), fig. 1,2, column 2, lines 48-68 | 1,8 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 25 April 1991 (25.04.91) | 02 July 1991 (02.07.91) |

| International Searching Authority | Signature of Authorized Officer |
|---|---|
| ISA/SU | |

Form PCT/ISA/210 (second sheet) (January 1985)